# EUROPEAN PATENT APPLICATION

(11) **EP 0 974 266 A1**
(43) Date of publication of application: **26.01.2000**
(21) Application number: 98500170.0
(22) Date of filing: 20.07.1998
(51) Int. Cl.: A01K 91/02

(54) **Long distance fishing equipment**

(71) Applicant: Domenech Ponsoda, Juan Felipe, 03012 Alicante (ES)
(72) Inventor: Domenech Ponsoda, Juan Felipe, 03012 Alicante (ES)
(74) Representative: Perez Bonal, Bernardo

(57) **Abstract**

A fishing equipment incorporating a self-propelled line carrier (1) to which a fishing line (2) and a carrier-retrieval line (3) attached to respective rods (4) and (5) are attached, said lines guiding the carrier to a given distance from the shore, whereby the fishing line (2) with hooks (7) is detached from the carrier (1) and the carrier returns to the shore by means of retrieval line (3).

The equipment incorporates supports (22) for rods (4) and (5), and may include a tensing system for fishing line or retrieval line.

## Description

### OBJECT OF THE INVENTION

The present invention relates to a fishing equipment which allows a fishing rod with various hooks to reach a considerably greater distance from the shore than those reachable with conventional fishing rods, incorporating to such end a self-propelled line carrier, hereinafter called torpedo, to which a line of a fishing rod and a line of another rod are attached, said lines guiding the torpedo to a given distance and thus permitting the access of the fishing line to remote positions from an angler on the shore.

### BACKGROUND TO THE INVENTION

Usual places for practicing angling are seashores or riverbanks. In river angling, the angler usually places himself on one of the banks. Limitations due to the length of fishing line are sometimes solved by the angler getting into water to reach those places where a larger group of fish is expected, and the same can occur on seashores. In both cases, there are the obvious limitations imposed by the depth of the water.

When it is desired to fish in an area with a shoal of fish but far from the shore, it is necessary to use a boat from which to throw the line, with subsequent discomforts that this solution supposes, such as unavailability of such boats, adverse weather conditions, etc.

At present, there is no method known to permit the fishing line to reach a long distance from the shore while the angler remains on the shore, which makes this invention as described below feasible.

### DESCRIPTION OF THE INVENTION

The fishing equipment of this invention basically consists of a self-propelled torpedo to which a fishing line and a torpedo-retrieval line are attached, these lines being attached to their respective rods which in turn can be attached to some supports embedded in the ground, the fishing line being provided with hooks and the torpedo with means of detachment of said fishing line when it reaches the desired position, and the retrieval line being employed to guide the torpedo back to shore.

The torpedo consists of a self-propelled element which incorporates a battery-fed propeller-type motor and a series of controls for motor ignition and battery charge, as well as a signaling pilot lamp.

The torpedo is provided with a fixing element at its front end for the retrieval line and, on its side wall, with a ring fixture through which the fishing line passes. This line is attached to the torpedo by means of a hook hooked to a groove situated at the back of the battery support. Said hook remains hooked while the line is taut, there being provided a semicircular collar coupled to said support through which the line passes, and the line remaining in contact with said collar while it is taut.

The position of the torpedo and the line tension are controlled by means of the two rods. Once the torpedo has reached the position chosen by the angler, the fishing line is released from the torpedo simply by its loosening, as the hook comes off the groove on the battery support.

The rods are provided with corresponding reels, both or either of which can be manual or electric-powered, situated horizontally on the rod, unlike conventional laterally-situated reels which often cause line-rippling problems.

Each rod may be held by a rod holders that can be stuck into sand, consisting of a long pole with two collars fixed along the side and into which the fishing rod is introduced and supported. The rod holder is also provided with a flat triangular piece whose mission is to prevent the holder from tilting once the holder is embedded in the sand up to a height slightly above the position of said piece.

The elements employed generally require two persons to control the tension of the lines when the torpedo is in movement and to guide the torpedo to the desired position by maintaining the tension.

One of the rods may incorporate a tensing system to maintain the tension of either of the lines attached to the torpedo, so that it does not require two persons to handle the rods and control the tension.

The gradual tensing system is situated immediately behind the reel and consists of a pulley formed of two small wheels located at the tip of a support perpendicularly attached to the rod, the distance between said wheels being adjustable to determine the pressure on the line passing between them and, consequently, the degree of its tension.

The equipment also incorporates a floater consisting of a floating element which facilitates the release of the line in the event of any of the hooks being caught by a rock or some other object. Said element is attached to the line and goes up when the line jerks, thereby pulling the line upward and consequently releasing the hook(s) from the rock.

In order to facilitate the transport, the fishing equipment includes a hand-cart consisting of a structure mounted on wheels which incorporates some hooks for holding the rods and brackets for the torpedo.

### BRIEF DESCRIPTION OF THE DRAWINGS

In order to supplement the description and for a better understanding of the invention, reference will now be made to the accompanying drawings, in which:

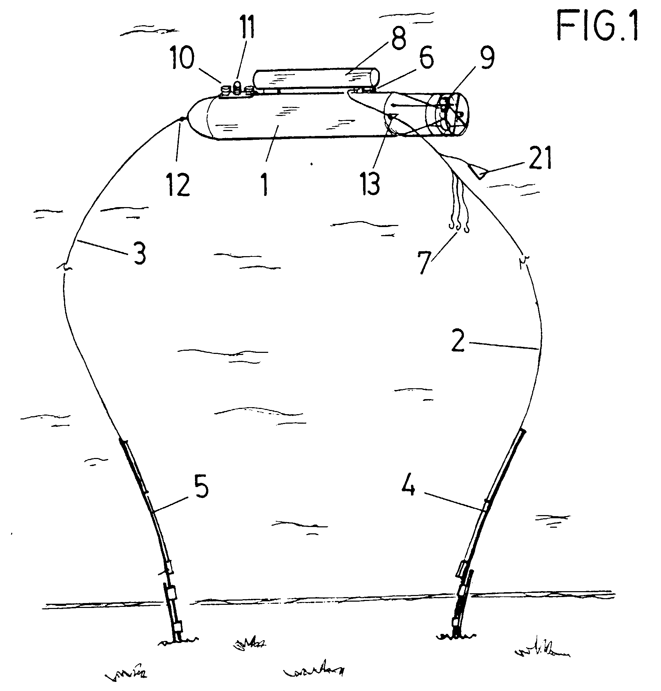

Figure 1 shows an arrangement of the torpedo and rods.

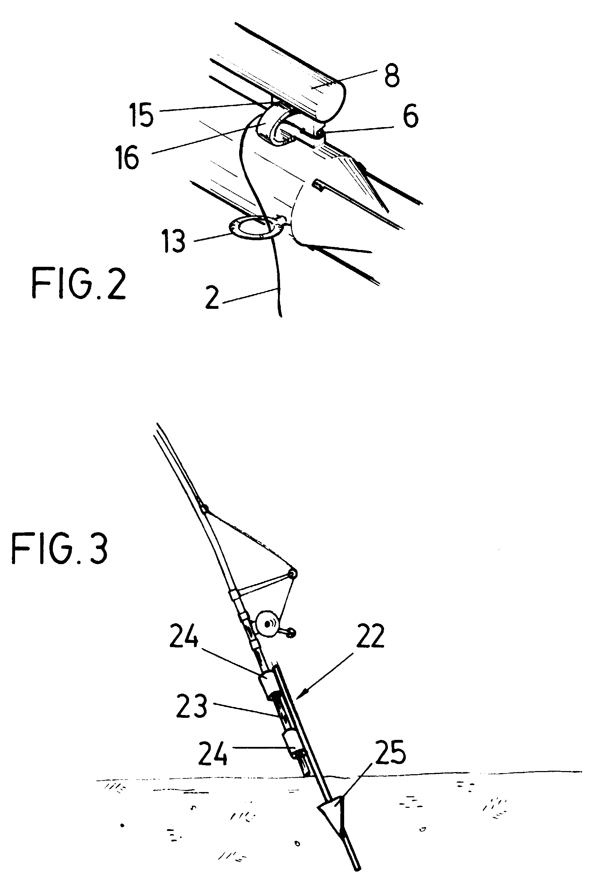

Figure 2 is a close-up view of the torpedo where the coupling of the hook can be observed.
Figure 3 is a side view of the supporting rod embedded in the sand, together with the fishing rod.

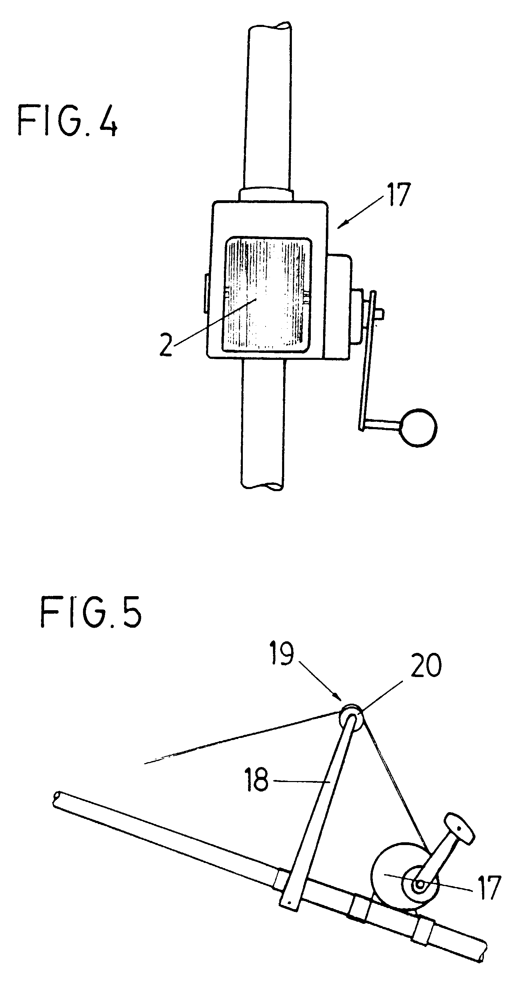

Figure 4 is a partial plan view of the rod with the horizontally fixed reel.
Figure 5 is a partial side view of the rod and the line-tensing system.

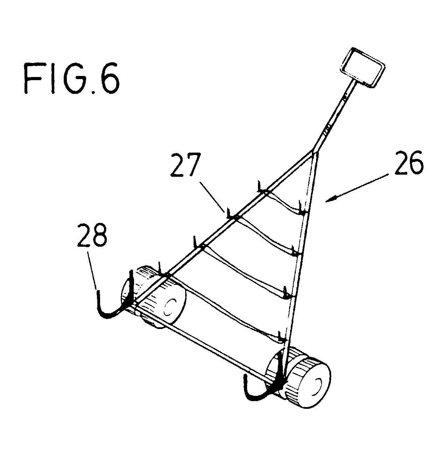

Figure 6 is a front view of the hand-cart.

### PREFERRED EMBODIMENT OF THE INVENTION

As shown in the figures, the long-distance fishing equipment comprises a self-propelled torpedo (1) to which a fishing line (2) and a torpedo-retrieval line(3) of corresponding rods (4, 5) are attached, a coupling means of fishing line (2) to torpedo (1) easily released when this reaches the position desired by the angler, the fishing line (2) incorporating fishing hooks (7), and the retrieval line (3) being permanently fixed to the torpedo to facilitate its return once the fishing line (2) is released.

The torpedo (1) is self-propelled by means of a battery (8) which feeds a propeller-type motor (9) regulated by a series of controls (10) for motor ignition and battery charge, provided likewise with a signaling pilot lamp (11).

The torpedo (1) is provided with a fixing element (12) at its front end for retrieval line (3) of rod (5), and, in a backward section of the side wall, a ring fixture (4) through which fishing line (2) of rod (4) passes. The tip of this line (2) is provided with a fixing element consisting of a hook coupled on a groove at the back of the battery (8) support (15) of the torpedo (1) which remains hooked when the line is taut, and a semicircular collar (16) is provided on the side wall of said support (15) through which fishing line (2) is passed to maintains the hooked position.

Rods (4, 5) are provided with respective reels (17), one of which may be manual and the other electric-powered or both manual or electric, situated horizontally on the rod.

In order to ensure the tension of the lines, a tensing system may be incorporated behind the reel, consisting of a support (18) which extends perpendicularly from the rod and ends at a pulley (19) formed of two small wheels (20) the distance between which can be adjusted by means of a press to determine the degree of tension of the line placed between them.

Fixed to the fishing line (2) is a floater (21) made of light-weight floating material which rises when the line is pulled because of a hook (7) getting caught by a rock or the like, facilitating its release.

The fishing equipment includes rod holders(22), each consisting of a long pole (23) comprising two collars (24) longitudinally aligned along the pole and through which the rod is introduced and supported, and a flat triangular piece (25) which prevents the holder from tilting while it is embedded in the sand.

The fishing equipment also includes a hand-cart for transporting the elements, provided with a support (26) with some hooks (27) for rods and a pair of brackets for the torpedo (1).

It is considered unnecessary to further extend this description for anyone skilled in the matter to understand the scope of this invention and the advantages it offers.

Material, shape, size and arrangement of the elements are susceptible of variations provided that they do not alter the essence of the invention.

The terms used in this description are not restrictive and should be interpreted in a broad sense.

## Claims

1. Long-distance fishing equipment comprising a self-propelled line carrier (1) to which a fishing line (2) and a retrieval line (3) of respective rods (4, 5) are attached, means of attachment of said fishing line (2) to said carrier (1) being readily detachable when the latter reaches the postion desired by the angler, said fishing line (2) provided with hooks (7) for fishing and said retrieval line (3) permanently fixed to said carrier (1) for retrieval thereof once the fishing line (2) has been released.

2. Long-distance fishing equipment in accordance with claim 1 characterized by that said line carrier (1) is self-propelled by means of a battery (8) that feeds a propeller-type motor (9), provided with a series of controls (10) for motor ignition and battery charge, as well as a signaling pilot lamp (11).

3. Long-distance fishing equipment in accordance with preceding claims, characterized by that the line carrier (1) is provided with an element (12) at the front end for fixing retrieval line (3) of rod (5), as well as a ring fixture (13) on the side wall and a semicircular collar (16) on the side wall of battery support (15) through which fishing line (2) of rod (4) passes, the end of said fishing line (2) having a hook (6) which remains hooked to a groove at the back of said battery support (15) while the line is taut.

4. Long-distance fishing equipment in accordance with preceding claims, characterized by that rods (4) and (5) are provided with respective reels (17), both or either of which may be manual or electrical, situated horizontally on the rod, it being possible to incorporate, behind the reel, a line-tensing system comprising a support (18) extending from the rod and ending at a pulley (19) formed of two wheels (20), the distance between which is adjustable by means of a press to determine the tension of the line held between.

5. Long-distance fishing equipment in accordance with preceding claims characterized by that fishing line (2) with hooks (7) is provided with a floater (21) of light-weight material fixed in such a way that it springs up when the line jerks because of some of the hooks being caught by a rock or similar, facilitating the release thereof.

6. Long-distance fishing equipment in accordance with preceding claims characterized by that it includes a support (22) for each rod, comprising a long pole (23) with two sleeves (24) fixed along the side wall and through which the rod is introduced and supported, and a flat triangular piece (25) which prevents tilting of the support when it is embedded in the sand.

7. Long-distance fishing equipment in accordance with preceding claims characterized by that it includes a hand-cart for transport of the elements, provided with a support (26) with some hooks (27) for rods and a pair of brackets (28) for line carrier (1).
